# EUROPÄISCHE PATENTSCHRIFT

(11) **EP 1 743 128 B1**
(45) Veröffentlichungstag und Bekanntmachung des Hinweises auf die Patenterteilung: **24.10.2012**
(21) Anmeldenummer: 05735637.0
(22) Anmeldetag: 26.04.2005
(51) Int. Cl.: F25D 23/12, F16M 11/04, F16M 11/08, G09F 7/18

(54) **HAUSHALTSGERÄT MIT VERSCHWENKBAREM ANZEIGESCHIRM**
DOMESTIC APPLIANCE HAVING A SWIVELED DISPLAY SCREEN
APPAREIL MENAGER COMPORTANT UN ECRAN D'AFFICHAGE PIVOTANT

(30) Priorität: 26.04.2004 DE 102004020267; 26.04.2004 DE 202004012298 U
(43) Veröffentlichungstag der Anmeldung: 17.01.2007
(73) Patentinhaber: BSH Bosch und Siemens Hausgeräte GmbH, 81739 München (DE)
(72) Erfinder: RAAB, Alfred, 73460 Hüttlingen (DE)
(86) Internationale Anmeldenummer: PCT/EP2005/051859
(87) Internationale Veröffentlichungsnummer: WO 2005/103590

(56) Entgegenhaltungen:
- US-A- 4 814 759
- US-A- 6 102 348
- US-A1- 2001 052 741
- US-A1- 2003 154 673
- US-B1- 6 692 093
- PATENT ABSTRACTS OF JAPAN Bd. 2000, Nr. 26, 1. Juli 2002 (2002-07-01) -& JP 2001 252140 A (SEKISUI HOUSE LTD), 18. September 2001 (2001-09-18)
- PATENT ABSTRACTS OF JAPAN Bd. 017, Nr. 267 (P-1543), 25. Mai 1993 (1993-05-25) -& JP 05 006140 A (SANYO ELECTRIC CO LTD), 14. Januar 1993 (1993-01-14)
- PATENT ABSTRACTS OF JAPAN Bd. 014, Nr. 102 (E-0894), 23. Februar 1990 (1990-02-23) -& JP 01 303977 A (HITACHI LTD), 7. Dezember 1989 (1989-12-07)

## Beschreibung

Die vorliegende Erfindung betrifft ein Haushaltsgerät mit einem Gehäuse, einer Aussparung im Gehäuse und einem Anzeigeschirm, der relativ zum Gehäuse verschwenkbar ist. In einer versenkten Stellung ist der Anzeigeschirm in der Aussparung des Gehäuses angeordnet.

Ein derartiges Haushaltsgerät ist aus der JP 2002-031469 A bekannt. Diese Druckschrift offenbart ein Kältegerät mit einem in einer Aussparung einer Türe befestigten Anzeigeschirm. Der Anzeigeschirm ist mit Stiften in Bohrungen um eine horizontale Drehachse schwenkbar gelagert. Zur Arretierung des Anzeigeschirms in verschiedenen Schwenklagen sind federbelastete Rastmittel am Anzeigeschirm vorgesehen, die in einer Rille der Aussparung geführt und in den verschiedenen Schwenklagen des Anzeigeschirms in Vertiefungen einrastbar sind. Der Anzeigeschirm kann aus einer in der Aussparung versenkten Stellung in zwei weitere Schwenklagen gebracht werden, in denen der Anzeigeschirm arretierbar ist. Nachteil dieser Konstruktion ist jedoch, dass der Winkel, um den der Anzeigeschirm aus seiner versenkten Stellung ausschwenkbar ist, recht klein ist. Der Anzeigeschirm kann daher in nur begrenztem Maße auf den Betrachter ausgerichtet werden.

Die US 2001/0052741 A1 offenbart ein Haushaltskältegerät gemäß dem Oberbegriff des Anspruches 1, mit einer Tür. In der Außenfläche der Tür ist eine rechteckige Mulde vorgesehen, in der eine LCD-Anzeigevorrichtung angeordnet ist. Die Anzeige der Anzeigevorrichtung wird von einem Rahmen gehalten, an dessen Seiten jeweils ein Scharnierstift vorgesehen ist, um die Anzeigvorrichtung in der Mulde drehbar zu lagern. Dadurch ist es möglich, durch Schwenken der Anzeigevorrichtung den Blickwinkel auf die Anzeige einzustellen.

Die US 2003/0154673 A1 offenbart eine Haltevorrichtung für einen Flachbildfernseher. Die Haltevorrichtung umfasst zwei Haltearme, die jeweils zwei Glieder aufweisen und mittels derer der Flachbildfernseher in horizontaler Richtung zwischen einer völlig ausgefahrenen und einer völlig eingefahrenen Position bewegbar ist. Es ist ferner eine Mulde in einer Blende vorgesehen, in der die Haltevorrichtung befestigt ist und die die Haltevorrichtung im eingefahrenen Zustand völlig aufnimmt.

Die JP 2001252140 A offenbart eine Küche. In einer Aussparung einer der Wände der Küche ist eine Anzeigevorrichtung angeordnet, welche zwischen einer eingeschwenkten und einer ausgeschwenkten Position bewegt werden kann.

Der vorliegenden Erfindung liegt daher die Aufgabe zugrunde, ein Haushaltsgerät der eingangs genannten Art bereitzustellen, bei welchem der Anzeigeschirm in einem weiten Winkelbereich verschwenkbar ist.

Die Aufgabe wird gelöst mit einem Haushaltsgerät nach Anspruch 1. Die abhängigen Ansprüche beziehen sich auf bevorzugte Ausgestaltungen.

Demnach wird ein Haushaltsgerät mit einem Gehäuse, einer Aussparung im Gehäuse und einem Anzeigeschirm bereitgestellt, der relativ zum Gehäuse verschwenkbar und in einer versenkten Stellung in der Aussparung des Gehäuses angeordnet ist. Dabei ist wenigstens eine Drehachse, an der der Anzeigeschirm aufgehängt ist, zwischen einer Position, in der sie den Anzeigeschirm in der versenkten Stellung hält, und einer ausgefahrenen Position beweglich, in der sie sich vor der Aussparung erstreckt und der Anzeigeschirm um die Drehachse drehbar ist. In der ausgefahrenen Stellung ist eine große Schwenkbewegungsfreiheit des Anzeigeschirms um die Drehachse leicht realisierbar.

Das Haushaltsgerät weist ein Paar erster Arme auf, mit denen der Anzeigeschirm an seiner Rückseite um die mindestens eine erste Drehachse drehbar verbunden ist, wobei die ersten Arme von einer in der versenkten Stellung des Anzeigeschirms gespreizten Konfiguration in eine winklige Konfiguration ausziehbar sind, die der ausgefahrenen Position der mindestens einen ersten Drehachse entspricht.

Bei dem erfindungsgemäßen Haushaltsgerät sind die ersten Arme und die zweiten Arme vorzugsweise als Platten ausgebildet. Dies verleiht der Konstruktion eine hohe Steifigkeit. Zudem können die Platten über einfache Scharniere miteinander bzw. dem Anzeigeschirm und dem Haushaltsgerät verbunden werden. Vorzugsweise weisen die ersten Arme jeweils die gleiche Länge und die zweiten Arme jeweils die gleiche Länge auf.

Alternativ zu der Befestigung der ersten Arme mittelbar über die vorstehend beschriebenen zweiten Arme an dem Haushaltsgerät besteht die Möglichkeit, die ersten Arme jeweils in ihrer Längsrichtung an einer Welle verschiebbar zu lagern, wobei die Welle an einer zu der Aussparung benachbarten Stelle am Haushaltsgerät drehbar angeordnet ist. Diese Konstruktion ermöglicht ebenso wie diejenige über die zweiten Arme, die ersten Arme von der beschriebenen gespreizten Konfiguration in die winklige Konfiguration überzuführen, um den Anzeigeschirm aus der Aussparung hinaus zu verlagern und zu verschwenken.

Vorzugsweise besitzt der Anzeigeschirm in seiner in der Aussparung versenkten Stellung keine Schwenkbewegungsfreiheit.

Vorzugsweise schließen die ersten Arme in der gespreizten Konfiguration, bei der sich der Anzeigeschirm in seiner in der Aussparung versenkten Stellung befindet, einen Winkel von etwa 150° bis etwa 180° miteinander ein. Vorteil hiervon ist, dass die ersten Arme in der versenkten Stellung des Anzeigeschirms somit nur eine geringe Tiefe einnehmen, wodurch die gesamte Konstruktion sehr flach ausgestaltet werden kann.

Bei dem erfindungsgemäßen Haushaltsgerät ist der Anzeigeschirm vorzugsweise über nur eine einzige erste Drehachse, mit den beiden ersten Armen verbunden, d.h. die beiden ersten Arme treffen an der ersten Drehachse aufeinander. Dabei ist die erste Drehachse bezüglich der Breite des Anzeigeschirms vorzugsweise mittig angeordnet.

Die Drehachsen, um die die ersten Arme drehbar sind, verlaufen vorzugsweise parallel zueinander. Des Weiteren sind diese Drehachsen vorzugsweise vertikal angeordnet, sodass der Anzeigeschirm um eine vertikale Drehachse verschwenkbar ist. Dies ermöglicht, den Anzeigeschirm nach links oder rechts auf einen Betrachter auszurichten, der sich nicht direkt vor der Anzeigeschirmaussparung, sondern seitlich davon befindet.

Das erfindungsgemäße Haushaltsgerät weist vorzugsweise Anschläge auf, die an den ersten Armen einander zugewandt angeordnet sind und in der winkligen Konfiguration der ersten Arme aneinander zum Anliegen kommen. Durch die Anschläge wird ein zwischen den ersten Armen minimal einstellbarer Winkel festgelegt. Die Anschläge weisen vorzugsweise abgeschrägte Flächen auf, die in der winkligen Konfiguration aneinander anliegen.

Vorzugsweise weist das Haushaltsgerät Reibungsbremsen auf, die eine Drehbewegung der ersten Arme und/oder des Anzeigeschirms um die erste Drehachse bremsen. Die Reibungsbremsen bewirken, dass der Anzeigeschirm in der vom Bediener eingestellten Lage verbleibt und sich nicht selbsttätig verstellt. Vorzugsweise umfasst jede Reibungsbremse an einem Stift der ersten Arme gelagerte Bremsscheiben, die einen zur ersten Drehachse senkrechten Flansch des Anzeigeschirms einklemmen. Der Stift ist vorzugsweise in einer Rille des Flansches geführt und kann sich an einem der vorstehend beschriebenen Anschläge befinden.

Vorzugsweise wird ein Teil des Gehäuses des erfindungsgemäßen Haushaltsgeräts von einem am Haushaltsgerät lösbar befestigten Rahmen gebildet, in welchem sich die Aussparung für den Anzeigeschirm befindet und an dessen Rückseite die Wellen drehbar befestigt sind. Hierdurch wird die Montage des Anzeigeschirms an dem Haushaltsgerät vereinfacht. Der Anzeigeschirm kann zunächst an dem Rahmen montiert werden, bevor dieser am Haushaltsgerät befestigt wird. Zu Wartungs- und Reparaturzwecken kann der Rahmen mitsamt dem Anzeigeschirm leicht entfernt werden. Der Rahmen ist vorzugsweise an einer Klappe oder einer Tür des Haushaltsgeräts befestigt, die zum Verschließen bzw. Öffnen des Haushaltsgeräts dient.

Bei dem erfindungsgemäßen Haushaltsgerät handelt es sich vorzugsweise um ein Kältegerät, beispielsweise einen Kühlschrank. Auf dem Anzeigeschirm können Informationen zum Kältegerät selbst, wie seine Typenbezeichnung, oder Informationen über dessen Betriebsparameter, wie beispielsweise die Temperatur in einem Innenraum des Kältegeräts, angezeigt werden. Darüber hinaus kann der Anzeigeschirm auch als PC- oder Fernsehbildschirm dienen.

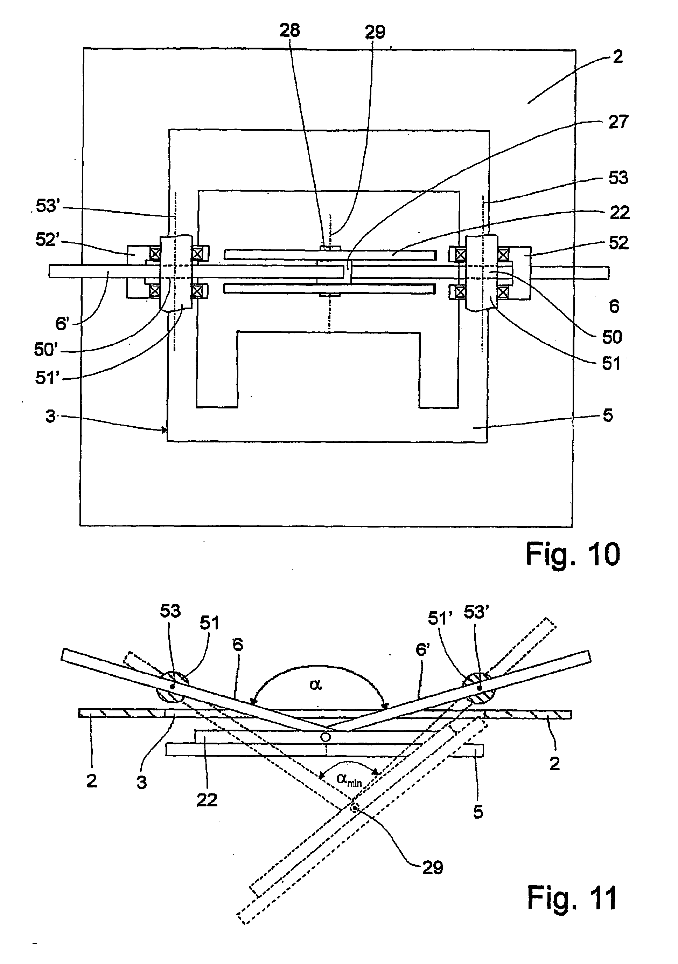

Weitere Ausgestaltungen und Vorteile der vorliegenden Erfindung werden im Folgenden anhand einer Ausführungsform der vorliegenden Erfindung gemäß der Fig. 10 und 11 erläutert. Das Gerät der Eiguren 1 bis 9 gehört nicht zur Erfindung. Dabei zeigt:
Fig. 1 eine perspektivische Ansicht eines aus einer Aussparung 3 herausgezogenen Anzeigeschirms 5 eines Kältegeräts;
Fig. 2 eine Ansicht aus der gleichen Perspektive wie Fig. 1, wobei sich der Anzeigeschirm 5 in einer in der Aussparung 3 nahezu versenkten Stellung befindet;
Fig. 3 eine rückwärtige, perspektivische Ansicht des Anzeigeschirms 5 und eines Rahmens 2, wobei sich der Anzeigeschirm 5 in einer in der Aussparung 3 versenkten Stellung befindet;
Fig. 4 eine Ansicht aus der gleichen Perspektive wie Fig.1, wobei sich der Anzeigeschirm 5 in einer nach rechts ausgeschwenkten Stellung befindet;
Fig. 5 eine Ansicht aus der gleichen Perspektive wie Fig. 3, wobei sich der Anzeigeschirm 5 in der gleichen ausgeschwenkten Stellung wie in Fig. 4 befindet;
Fig. 6 eine schematische Schnittansicht des Anzeigeschirms 5 und des Rahmens 2 in einer gemäß Fig. 3 in der Aussparung 3 versenkten Stellung;
Fig. 7 die gleiche Schnittansicht wie Fig. 6, wobei sich der Anzeigeschirm 5 in einer aus der Aussparung 3 hinaus verlagerten bzw. verschwenkten Stellung befindet;
Fig. 8 die gleiche Schnittansicht wie Fig. 6, wobei sich der Anzeigeschirm 5 in einer weiteren aus der Aussparung 3 hinaus verlagerten bzw. verschwenkten Stellung befindet;
Fig. 9 ein Schnittansicht durch eine Reibungsbremse 40 gemäß A-A in Fig. 3;
Fig. 10 eine schematische rückwärtige Ansicht eines Anzeigeschirms 5 eines Kältegeräts gemäß einer Ausführungsform der vorliegenden Erfindung, wobei sich der Anzeigeschirm 5 in einer in einer Aussparung 3 eines Rahmens 2 versenkten Stellung befindet;
Fig. 11 eine schematische Schnittansicht des aus der Aussparung 3 ausgelagerten bzw. ausgeschwenkten Anzeigeschirms 5 der Fig. 10.

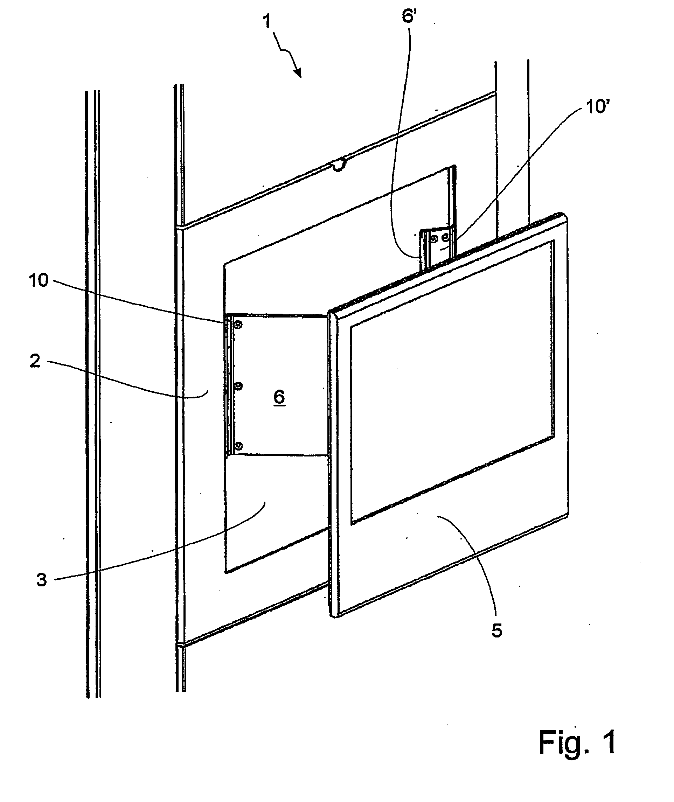

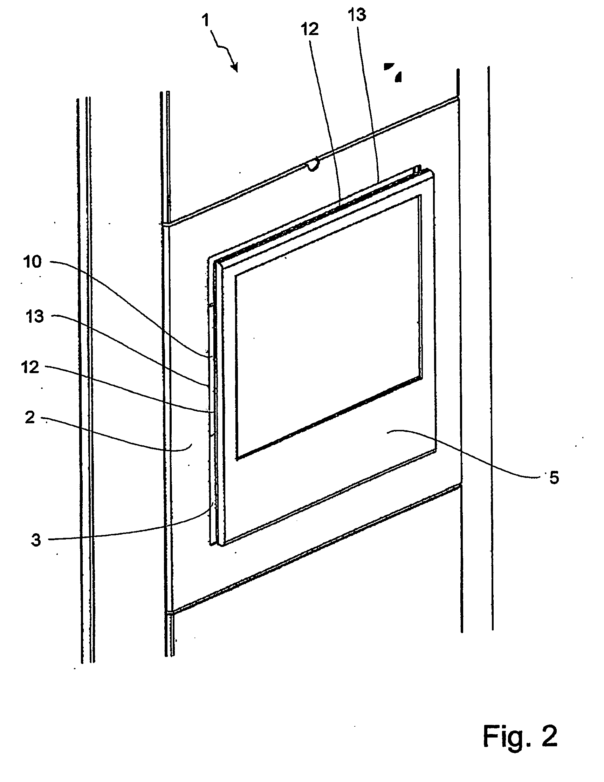

Fig. 1 zeigt in einer perspektivischen Teilansicht ein Frontteil 1 einer Tür eines Haushaltsgeräts, bei dem es sich beispielsweise um einen Kühlschrank handeln kann. Die Tür wiederum bildet einen Teil eines einen Innenraum des Haushaltsgeräts umschließenden Gehäuses. In der in Fig. 1 dargestellten Ansicht befindet sich der Innenraum hinter dem dargestellten Fronteil 1. Das Frontteil 1 umfasst einen flachen Rahmen 2, der eine zentrale, rechteckige Aussparung 3 aufweist. Der Rahmen 2 ist an der Tür beispielsweise über eine Schraubverbindung befestigt. Des weiteren umfasst das Haushaltsgerät einen flachen Anzeigeschirm 5, der über ein Paar erster Arme 6 und 6' und ein Paar zweiter Arme 10 und 10' an dem Rahmen 2 befestigt ist. In der dargestellten Ansicht wird der Arm 10 größtenteils von dem Rahmen 2 verdeckt. Die ersten und zweiten Arme 6, 6' und 10, 10' sind als Platten ausgebildet. Der Anzeigeschirm 5 befindet sich in Fig. 1 in einer über die Aussparung 3 hinaus ausgelagerten Stellung, wohingegen Fig. 2 aus derselben Perspektive wie Fig. 1 den Anzeigeschirm 5 in einer in der Aussparung 3 nahezu versenkten Stellung zeigt. Geringe Spalte zwischen Außenkanten 12 des Anzeigeschirms 5 und Rändern 13 der Aussparung 3 sind in Fig. 2 noch erkennbar.

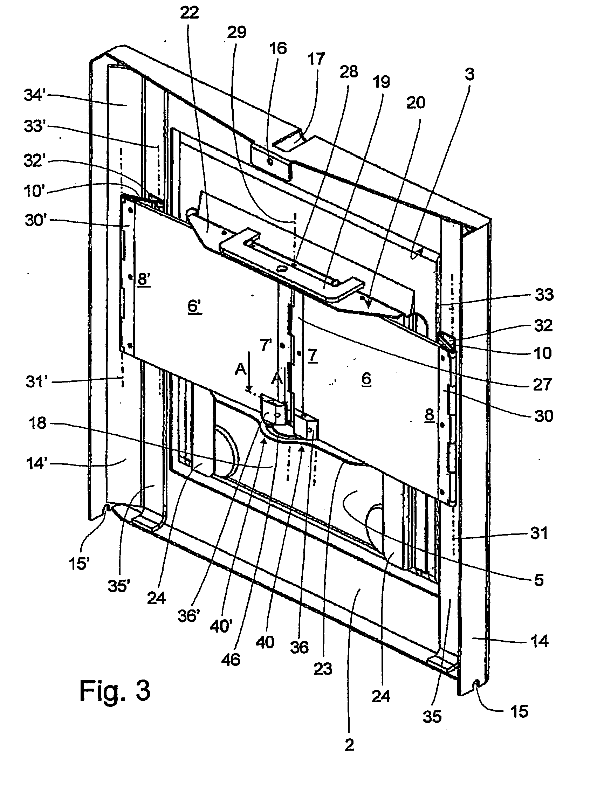

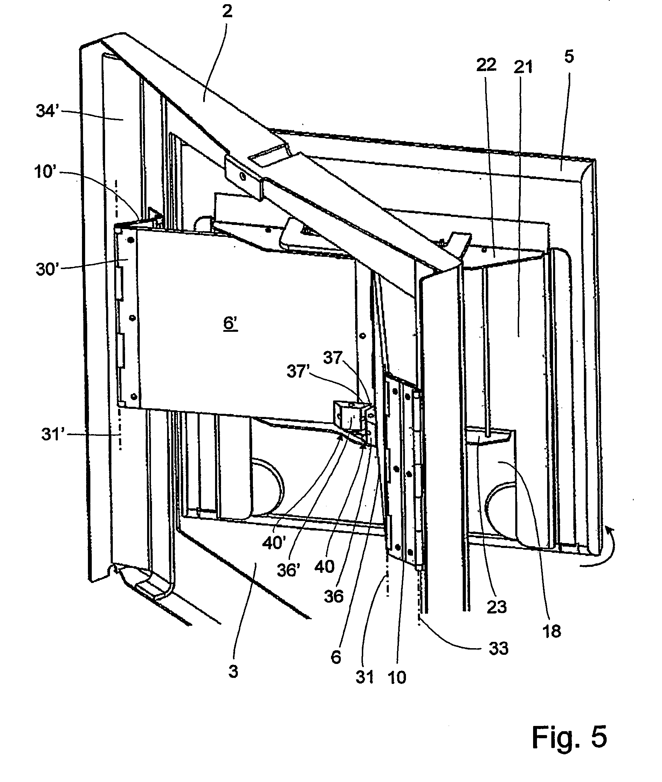

Fig. 3 zeigt eine rückwärtige, perspektivische Ansicht des Rahmens 2. Zur Montage des Rahmens 2 an dem Türfrontteil 1 wird dieser mit Kerben 15 an Seitenleisten 14 zunächst auf entsprechende, nicht dargestellte Halterungen an dem Türfrontteil 1 aufgesetzt. Anschließend wird der Rahmen 2 mittels einer nicht dargestellten Schraube, die durch eine Ausnehmung 17 und durch ein Loch 16 am Rahmen 2 gesteckt und in ein nicht dargestelltes Innengewinde an dem Türfrontteil 1 geschraubt wird, befestigt. In Fig. 3 befindet sich der Anzeigeschirm 5 in einer in der Aussparung 3 vollständig versenkten Stellung, in der die Vorderseite des Anzeigeschirms 5 mit der des Rahmens 2 bündig ist. Der Anzeigeschirm 5 weist auf seiner Rückseite eine Rückwand 18 auf, an der eine Trägerplatte 20 montiert ist, die jedoch in der dargestellten Ansicht von den ersten Armen 6, 6' teilweise verdeckt wird. Die Trägerplatte 20 umfasst eine aus Fig. 5 besser ersichtliche, zur Rückwand 18 des Anzeigeschirms 5 parallele Hauptplatte 21 sowie einen oberen Flansch 22 und einen unteren Flansch 23, die beide in horizontaler Richtung von der Hauptplatte 21 abstehen. Die Flansche 22 und 23 sind, zurückkehrend zu Fig. 3, als Leisten ausgebildet. Ein Griff 19 des Anzeigeschirms 5 liegt auf dem oberen Flansch 22 auf und ist an diesem über geeignete Mittel, beispielsweise Rastmittel oder Schrauben befestigt. Des weiteren umfasst die Trägerplatte 20 zwei sich von der Hauptplatte 21 nach unten hin erstreckende Füße 24.

Wie Fig. 3 weiter zeigt, sind die ersten Arme 6 und 6' an jeweils einem Ende 7, 7' über ein erstes Scharnier 27 gelenkig miteinander verbunden. Das Scharnier 27 weist einen vertikal ausgerichteten Stift 28 auf, der in Bohrungen der Flansche 22, 23 gehalten wird. Somit sind die ersten Arme 6 und 6' nicht nur untereinander, sondern auch mit der Trägerplatte 20 und somit mit dem Anzeigeschirm 5 gelenkig verbunden. Der Stift 28 legt eine erste, vertikal ausgerichtete Drehachse 29 fest, um die ersten Ar me 6 und 6' und der Anzeigeschirm 5 drehbar sind. Der Stift 28 bzw. die Drehachse 29 sind bezüglich der Breite des Anzeigeschirms 5 mittig zum Anzeigeschirm 5 angeordnet. Die anderen Enden 8, 8' der ersten Arme 6 und 6' sind über zweite Scharniere 30 und 30' mit je einem Ende der zweiten Arme 10 und 10' gelenkig und um jeweils zweite Drehachsen 31, 31' drehbar verbunden. Die anderen Enden der zweiten Arme 10 und 10' sind über dritte Scharniere 32, 32' an Leisten 35, 35' des Rahmens 2 gelenkig um jeweils eine dritte Drehachse 33, 33' drehbar befestigt. Die zweiten Drehachsen 31, 31' und die dritten Drehachsen 33, 33' verlaufen parallel zu der ersten Drehachse 29, d.h. sie sind ebenfalls vertikal ausgerichtet wie die erste Drehachse 29. Der gesamte in Fig. 3 gezeigte Aufbau ist bezüglich einer den Anzeigeschirm 5 mittig schneidenden vertikalen Ebene spiegelsymmetrisch aufgebaut. D.h. insbesondere die ersten Arme 6 und 6' weisen untereinander die gleichen Abmessungen auf, wie auch die zweiten Arme 10 und 10' untereinander die gleichen Abmessungen aufweisen. Dabei besitzen die Platten, die die ersten Arme 6, 6' bilden, in horizontaler Richtung eine wesentlich größere Länge als die Platten, die die zweiten Arme 10, 10' bilden.

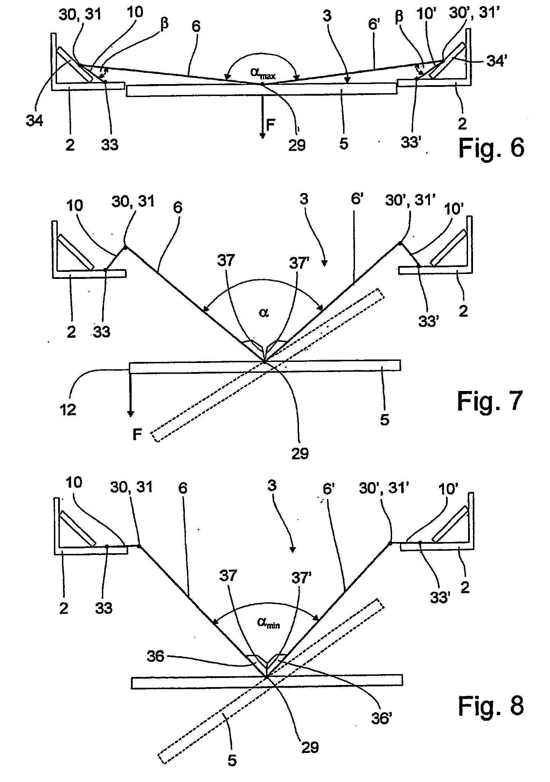

Durch die beschriebenen, gelenkigen Verbindungen des Anzeigeschirms 5, der ersten Arme 6 und 6', der zweiten Arme 10 und 10' mit dem Rahmen 2 kann der Anzeigeschirm 5 aus der in der Fig. 3 dargestellten, versenkten Stellung herausgezogen und verschwenkt werden, was in den Fig. 6 bis 8 in schematischen Darstellungen einer horizontal verlaufenden Schnittebene dargestellt ist. In Fig. 6 befindet sich der Anzeigeschirm 5, wie auch in Fig. 3 gezeigt, in der in der Aussparung 3 des Rahmens 2 vollständig versenkten Stellung. In dieser versenkten Stellung liegen die zweiten Scharniere 30, 30' mit ihren Drehachsen 31, 31' jeweils an schräg angestellten Anschlagleisten 34, 34' an, die sich auf der Rückseite des Rahmens 2 befinden. Der Anzeigeschirm 5 kann somit über die in Fig. 6 dargestellte Stellung nicht weiter in den Rahmen 2 hinein, d.h. in der dargestellten Ansicht nicht weiter nach oben, verschoben werden. Fig. 3 zeigt die Anschlagleiste 34' in der rückwärtigen Ansicht auf den Rahmen 2. In der in Fig. 6 gezeigten, versenkten Stellung besitzt der Anzeigeschirm 5 keinerlei Schwenkbewegungsfreiheit um die erste Drehachse 29. Die ersten Arme 6 und 6' befinden sich in einer gespreizten Konfiguration, in der sie einen maximal möglichen Winkel αₘₐₓ von beispielsweise etwa 150° bis 180° miteinander einnehmen. Die ersten und zweiten Arme 6, 6', 10, 10' spannen an den zweiten Scharnieren 30, 30' jeweils einen spitzen Winkel β auf. Dieser Winkel β sollte wenigstens 5°, besser wenigstens 10° oder gar 15° betragen, da bei einem zu kleinen Winkel β die Zugkraft, die auf den Anzeigeschirm ausgeübt werden muss, um die Reibung der Scharniere 29, 30, 30', 33, 33' zu überwinden und die Achse 29 aus der Aussparung 3 des Rahmens 2 heraus zu verlagern, sehr groß wird.

Durch Ziehen am Anzeigeschirm 5 mit einer in Fig. 6 eingezeichneten mittig am Anzeigeschirm angreifenden Kraft F kann der Anzeigeschirm 5 von der in Fig. 6 versenkten Stellung in die in Fig. 7 mit durchgezogenen Linien dargestellte, ausgelagerte Stellung gebracht werden, in welcher der Anzeigeschirm 5 vor der Aussparung 3 in etwa parallel zum Rahmen 2 angeordnet ist. Dabei werden die ersten Arme 6 und 6' um die erste Drehachse 29 gedreht und damit von der in der Fig. 6 gespreizten Konfiguration in eine winklige Konfiguration übergeführt. In dieser nehmen die ersten Arme 6 und 6' im dargestellten Ausführungsbeispiel einen Winkel _{α} von etwa 100° miteinander ein. Zugleich wird die erste Drehachse 29 über die Aussparung 3 hinaus verlagert. In dieser ausgelagerten Stellung besteht nun die Möglichkeit, den Anzeigeschirm 5, wie in Fig. 7 in unterbrochenen Linien dargestellt, um die erste Drehachse 29 zu verschwenken, indem die Bedienperson an einer der Außenkanten 12 des Anzeigeschirms, hier der linken Außenkante 12, zieht. Der Anzeigeschirm 5 kann somit auf einen rechts von der Aussparung 3 befindlichen Betrachter ausgerichtet werden.

Wie in Fig. 8 gezeigt, kann der Anzeigeschirm 5 über die in Fig. 7 gezeigte Stellung noch weiter über den Rahmen 2 hinaus in eine Endstellung verlagert werden. In dieser Endstellung kommen die zweiten Arme 10, 10' an der Rückseite des Rahmens 2 zum Anliegen. Die zweiten Arme 10, 10' können somit nicht weiter um die dritten Drehachsen 33, 33' verschwenkt werden. Zudem befinden sich an den ersten Armen 6, 6' Anschläge 36, 36', die mit jeweils abgeschrägten Flächen 37, 37' aneinander zum Anliegen kommen. Damit legen die Anschläge 36, 36' einen minimal möglichen Winkel aₘᵢₙ zwischen den ersten Armen 6, 6' fest, der im dargestellten Ausführungsbeispiel etwa 80° beträgt. Der in durchgezogenen Linien dargestellte Anzeigeschirm 5 kann durch Verschwenken um die erste Drehachse 29 auf einen rechts von der Aussparung 3 befindlichen Betrachter ausgerichtet werden, was in unterbrochenen Linien dargestellt ist. Wenn wie in Fig. 8 gezeigt, die Anschläge 36 und 36' einander berühren und die zweiten Arme 10 und 10' an der Rückseite des Rahmens 2 anliegen, dann ist die Drehachse 29 bezogen auf die Breite der Aussparung 3 exakt mittig platziert, so dass der Anzeigeschirm 5 beim Verschwenken nicht gegen den Rahmen 2 stoßen kann.

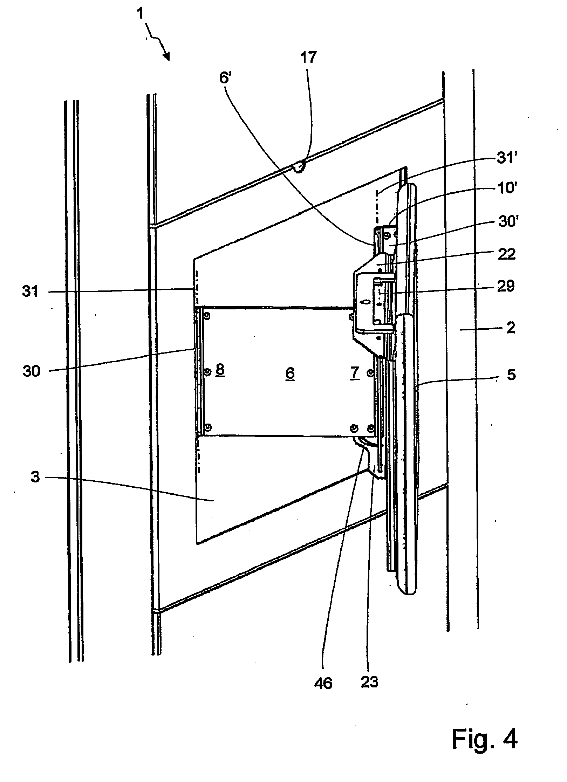

Die Fig. 4 und 5 zeigen perspektivische Ansichten des in eine weitere Schwenklage verschwenkten Anzeigeschirms 5. Fig. 4 zeigt eine seitliche Vorderansicht des Anzeigeschirms 5 mit dem Rahmen 2 und dem Frontteil 1 der Tür des Haushaltsgeräts. Fig. 5 zeigt dieselbe Stellung des Anzeigeschirms 5 in einer rückwärtigen Ansicht auf den Rahmen 2 und den Anzeigeschirm 5. In der in den Fig. 4 und 5 dargestellten Schwenklage des Anzeigeschirms 5 berühren sich die abgeschrägten Flächen 37 und 37' der Anschläge 36 und 36' gerade noch nicht, d.h. der Anzeigeschirm 5 kann noch weiter in die durch den Pfeil dargestellte Richtung verschwenkt werden bis sich die Flächen 37 und 37' berühren und somit der Winkel αₘᵢₙ zwischen den ersten Armen 6 nun und 6' erreicht ist.

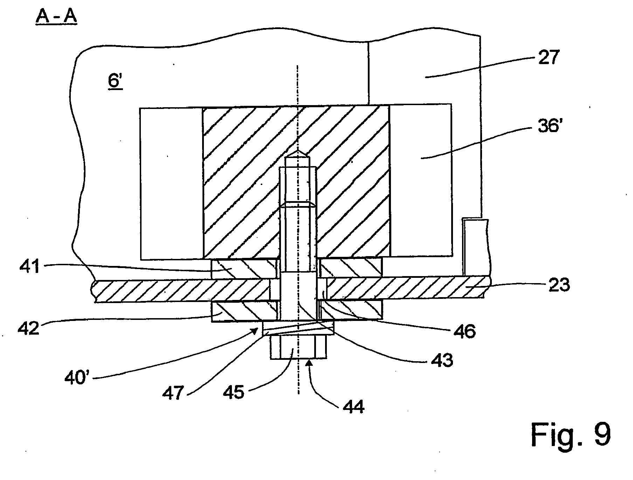

Um den Anzeigeschirm 5 in der vom Bediener eingestellten Lage zu halten, d.h. ein selbsttätiges Bewegen des Anzeigeschirms 5 zu verhindern, sind, wie beispielsweise aus Fig. 3 oder Fig. 5 ersichtlich, Reibungsbremsen 40, 40' vorgesehen, die eine Drehbewegung der ersten Arme 6 und 6' und des Anzeigeschirms 5 um die erste Drehachse 29 bremsen. Fig. 9 zeigt einen Schnitt durch die linke Reibungsbremse 40'. Die rechte Reibungsbremse 40 besitzt jedoch denselben Aufbau. Die Reibungsbremse 40' umfasst zwei Bremsscheiben 41 und 42, die auf einem Stiftteil 43 einer mit dem Anschlag 36' verbunden Schraube 44 gelagert sind. Der Stiftteil 43 ist, wie auch Fig. 3 zeigt, in einer Rille 46 des unteren Flansches 23 der Trageplatte 20 geführt. Eine erste Bremsscheibe 41 ist zwischen dem Anschlag 36' und dem unteren Flansch 23 der Trageplatte 20 angeordnet. Eine zweite Bremsscheibe 42 befindet sich zwischen dem unteren Flansch 23 und einem Kopfteil 45 der Schraube 44. Zwischen dem Kopfteil 45 der Schraube 44 und der zweiten Bremsscheibe 42 ist ein Federelement 47 angeordnet. Dies bewirkt, dass der untere Flansch 23 von den Bremsscheiben 41 und 42 eingeklemmt wird. Somit wird eine Drehbewegung des ersten Arms 6' um die erste Drehachse 29 durch eine zwischen den Berührungsflächen der Bremsscheiben 41 und 42 und dem unteren Flansch 29 wirkende Reibungskraft gebremst. Ebenso wird durch die Reibungsbremse 40 eine Drehbewegung des ersten Arms 6 und des Anzeigeschirms 5 um die erste Drehachse 29 gebremst. Zum Verstellen der Position des Anzeigeschirms 5 muss zunächst die zwischen den Bremsscheiben 41 und 42 und dem unteren Flansch 23 wirkende Haftreibung überwunden werden. Dies verhindert, dass sich der Anzeigeschirm 5 selbsttätig aus der vom Bediener eingestellten Lage bewegt. Zudem besitzen das erste Scharnier 29, die zweiten Scharniere 30, 30' und die dritten Scharniere 32, 32' eine definierte Reibung, wodurch ebenfalls bewirkt wird, dass der Anzeigeschirm 5 jeweils in der Stellung verharrt, in welcher der Bediener ihn freigibt. Durch Justieren der Schrauben 44 kann das Reibungsmoment, das einer Verschwenkung des Anzeigeschirms 5 entgegenwirkt, so eingestellt werden, dass von einem Benutzer an einem seitlichen Rand des Anzeigeschirms 5 zu dessen Verschwenkung um die Achse 29 gezogen werden kann, die Arme 6, 6', 10, 10' aber in Ruhe bleiben, solange die Grenze der Schwenkbewegungsfreiheit des Anzeigeschirms 5 nicht erreicht ist.

Die Fig. 10 und 11 veranschaulichen eine Ausführungsform der vorliegenden Erfindung. Fig. 10 zeigt eine rückwärtige Ansicht auf einen Rahmen 2 mit einem Anzeigeschirm 5, der sich in einer in einer Aussparung 3 des Rahmens 2 versenkten Stellung befindet. Fig. 11 zeigt den Anzeigeschirm 5 und den Rahmen 2 in einer horizontalen Schnittansicht. Dabei ist der Anzeigeschirm 5 in einer aus der Aussparung 3 hinaus durch eine translatorische Bewegung verlagerten Stellung und in unterbrochenen Linien in einer verschwenkten Stellung gezeigt. In Übereinstimmung mit der in den Fig. 1 bis 9 beschriebenen Ausführungsform sind bei der in den Fig. 10 und 11 dargestellten Ausführungsform die ersten Arme 6, 6' über ein erstes Scharnier 27 um eine erste, gemeinsame Drehachse 29 drehbar mit dem Anzeigeschirm 5 verbunden. Die ersten Arme 6, 6' sind hier jedoch nicht als Platten ausgebildet, sondern als Stangen 6, 6' mit vorzugsweise unrundem Profil. Die Stangen 6, 6' sind jeweils in ihrer Längsrichtung verschiebbar in Durchgangslöchern 50, 50' von Wellen 51,51' geführt. Die Wellen 51, 51' selbst sind drehbar an Halterungen 52, 52' gelagert, die an der Rückseite des Rahmens 2 befestigt sind. Die Wellen 51, 51' sind dabei um vertikale Drehachsen 53, 53' drehbar.

Wie in Fig. 11 mit durchgezogenen Linien dargestellt, kann der Anzeigeschirm 5 durch Ziehen aus seiner in der Aussparung 3 versenkten Stellung über die Aussparung 3 hinaus verlagert werden. Dabei werden die ersten Arme 6 und 6' innerhalb der Durchgangslöcher 50, 50' verschoben und die Wellen 51,51' um ihre Drehachsen 53, 53' gedreht. Die erste Drehachse 29 wird über die Aussparung 3 hinaus verlagert, wodurch nun die Möglichkeit besteht, den Anzeigeschirm 5 um die erste Drehachse 29 zu verschwenken und, wie in Fig. 11 in unterbrochenen Linien dargestellt, soweit auszuziehen, bis der minimale Winkel aₘᵢₙ zwischen den ersten Armen 6 und 6' und somit eine der möglichen Endlagen des Anzeigeschirms 5 erreicht ist. Geeignete, nicht dargestellte Anschläge legen die möglichen Endlagen des Anzeigeschirms 5 fest. Mittels nicht dargestellter Reibungsbremsen wird verhindert, dass sich der Anzeigeschirms 5 aus der vom Bediener eingestellten Stellung selbsttätig löst. Dabei können die Reibungsbremsen wie diejenigen der in den Fig. 1 bis 9 dargestellten Ausführungsform gestaltet sein, wobei Anpassungen an den anderen Aufbau notwendig sind. Alternativ kann auch eine definierte Reibung zwischen den Durchgangslöchern 50, 50' der Wellen 51, 51' und den darin geführten ersten Armen 6, 6' vorgesehen werden.

## Patentansprüche

1. Haushaltsgerät mit einem Gehäuse, einer Aussparung (3) im Gehäuse und einem Anzeigeschirm (5), der relativ zum Gehäuse verschwenkbar und in einer versenkten Stellung in der Aussparung (3) des Gehäuses angeordnet ist, **gekennzeichnet durch** ein Paar erster Arme (6, 6'), mit denen der Anzeigeschirm (5) an seiner Rückseite um mindestens eine erste Drehachse (29) drehbar aufgehängt ist und zwischen einer Position, in der die erste Drehachse (29) den Anzeigeschirm (5) in der versenkten Stellung hält, und einer ausgefahrenen Position beweglich ist, in der sich die erste Drehachse (29) vor der Aussparung (3) erstreckt und der Anzeigeschirm (5) um die erste Drehachse (29) drehbar ist, wobei die ersten Arme (6, 6') von einer in der versenkten Stellung des Anzeigeschirms (5) gespreizten Konfiguration in eine winklige Konfiguration ausziehbar sind, in der die mindestens eine erste Drehachse (29) sich in der ausgefahrenen Position befindet, wobei die ersten Arme (6, 6') jeweils in ihrer Längsrichtung an einer Welle (51, 51') verschiebbar gelagert sind, die an einer zur Aussparung (3) benachbarten Stelle (2) am Haushaltsgerät drehbar angeordnet ist.

2. Haushaltsgerät nach Anspruch 1, **dadurch gekennzeichnet, dass** die ersten Arme (6, 6') in der gespreizten Konfiguration einen Winkel von etwa 150° bis etwa 180° miteinander einschließen.

3. Haushaltsgerät nach Anspruch 1 oder 2, **dadurch gekennzeichnet, dass** der Anzeigeschirm (5) über die erste Drehachse (29) gemeinsam mit den beiden ersten Armen (6, 6') verbunden ist.

4. Haushaltsgerät nach Anspruch 3, **dadurch gekennzeichnet, dass** das die erste Drehachse (29) bezüglich der Breite des Anzeigeschirms (5) mittig angeordnet ist.

5. Haushaltsgerät nach einem der vorangehenden Ansprüche, **dadurch gekennzeichnet, dass** der Anzeigeschirm (5) in seiner in der Aussparung (3) versenkten Stellung keine Schwenkbewegungsfreiheit besitzt.

6. Haushaltsgerät nach einem der vorangehenden Ansprüche, **dadurch gekennzeichnet, dass** die ersten Arme (6, 6') um Drehachsen (29, 53, 53') drehbar sind, die parallel zueinander verlaufen.

7. Haushaltsgerät nach Anspruch 6, **dadurch gekennzeichnet, dass** die Drehachsen (29, 53, 53') vertikal verlaufen.

8. Haushaltsgerät nach einem der vorangehenden Ansprüche, **gekennzeichnet durch** Anschläge (36, 36'), die an den ersten Armen (6, 6') einander zugewandt angeordnet sind und in der winkligen Konfiguration der ersten Arme (6, 6') aneinander zum Anliegen kommen.

9. Haushaltsgerät nach Anspruch 8, **dadurch gekennzeichnet, dass** die Anschläge (36, 36') jeweils abgeschrägte Flächen (37, 37') aufweisen, die in der winkligen Konfiguration der ersten Arme (6, 6') aneinander anliegen.

10. Haushaltsgerät nach einem der vorangehenden Ansprüche, **dadurch gekennzeichnet, dass** eine Drehbewegung der ersten Arme (6, 6') und/oder des Anzeigeschirms (5) um die erste Drehachse (29) durch mindestens eine Reibungsbremse (40, 40') gebremst wird.

11. Haushaltsgerät nach Anspruch 10, **dadurch gekennzeichnet, dass** die mindestens eine Reibungsbremse (40, 40') an einem Stift (43) der ersten Arme (6, 6') gelagerte Bremsscheiben (41, 42) umfasst, die einen zur ersten Drehachse (29) senkrechten Flansch (23) des Anzeigeschirms (5) einklemmen.

12. Haushaltsgerät nach Anspruch 11, **dadurch gekennzeichnet, dass** der Stift (43) in einer Rille (46) des Flansches (23) geführt ist.

13. Haushaltsgerät nach einem der vorangehenden Ansprüche, **dadurch gekennzeichnet, dass** ein Teil des Gehäuses des Haushaltsgeräts von einem lösbar am Haushaltsgerät befestigten Rahmen (2) gebildet wird, in welchem sich die Aussparung (3) für den Anzeigeschirm (5) befindet und an dessen Rückseite (4) die Wellen (51, 51') drehbar befestigt sind.

14. Haushaltsgerät nach einem der vorangehenden Ansprüche, **dadurch gekennzeichnet, dass** der Rahmen (2) an einer Klappe oder einer Tür (1) des Haushaltsgeräts befestigt ist, die zum Verschließen bzw. Öffnen eines Innenraums des Haushaltsgeräts dienen.

15. Haushaltsgerät nach einem der vorangehenden Ansprüche, **dadurch gekennzeichnet, dass** es sich um ein Kältegerät, insbesondere einen Kühlschrank, handelt.

## Claims

1. Domestic appliance with a housing, a recess (3) in the housing and a display screen (5), which is pivotable relative to the housing and arranged in a recessed setting in the recess (3) of the housing, **characterised by** a pair of first arms (6, 6') by which the display screen (5) is suspended at the rear side thereof to be rotatable about at least one first axis (29) of rotation and is movable between a position in which the first axis (29) of rotation keeps the display screen (5) in the recessed setting and a moved-out position in which the first axis (29) of rotation extends in front of the recess (3) and the display screen (5) is rotatable about the first axis (29) of rotation, wherein the first arms (6, 6') are extendible from a spread-out configuration in the recessed setting of the display screen (5) into an angular configuration in which the at least one first axis (29) of rotation is disposed in the moved-out position, and wherein the first arms (6, 6') are mounted to be displaceable in the longitudinal direction thereof on a shaft (51, 51') rotatably arranged at a point (2), which is adjacent to the recess (3), at the domestic appliance.

2. Domestic appliance according to claim 1, **characterised in that** the first arms (6, 6') in the spread-out configuration include an angle with one another of approximately 150° to approximately 180°.

3. Domestic appliance according to claim 1 or 2, **characterised in that** the display screen (5) is connected by way of the first axis (29) of rotation in common with the two first arms (6, 6').

4. Domestic appliance according to claim 3, **characterised in that** the first axis (29) of rotation is arranged centrally with respect to the width of the display screen (5).

5. Domestic appliance according to any one of the preceding claims, **characterised in that** the display screen (5) has no freedom of pivotable movement in the setting thereof recessed into the recess (3).

6. Domestic appliance according to any one of the preceding claims, **characterised in that** the first arms (6, 6') are rotatable about axes (29, 53, 53') of rotation extending parallel to one another.

7. Domestic appliance according to claim 6, **characterised in that** the axes (29, 53, 53') of rotation extend vertically.

8. Domestic appliance according to any one of the preceding claims, **characterised by** abutments (36, 36') which are arranged at the first arms (6, 6') to face one another and which come into contact with one another in the angular configuration of the first arms (6, 6').

9. Domestic appliance according to claim 8, **characterised in that** the abutments (36, 36') have respective inclined surfaces (37, 37') which bear against one another in the angular configuration of the first arms (6, 6').

10. Domestic appliance according to any one of the preceding claims, **characterised in that** a rotational movement of the first arms (6, 6') and/or of the display screen (5) about the first axis (29) of rotation is braked by at least one friction brake (40, 40').

11. Domestic appliance according to claim 10, **characterised in that** the at least one friction brake (40, 40') comprises a brake disc (41, 42) which is mounted on a pin (43) of the first arm (6, 6') and which clamp a flange (23), which is perpendicular to the first axis (29) of rotation, of the display screen (5).

12. Domestic appliance according to claim 11, **characterised in that** the pin (43) is guided in a groove (46) of the flange (23).

13. Domestic appliance according to any one of the preceding claims, **characterised in that** a part of the housing of the domestic appliance is formed by a frame (2) which is detachably fastened to the domestic appliance and in which the recess (3) for the display screen (5) is disposed, the shafts (51, 51') being rotatably fastened to the rear side (4) of the frame.

14. Domestic appliance according to any one of the preceding claims, **characterised in that** the frame (2) is fastened to a flap or a door (1), which serves for closing or opening an interior space of the domestic appliance, of the domestic appliance.

15. Domestic appliance according to any one of the preceding claims, **characterised in that** it is a refrigerating appliance, particularly a refrigerator.

## Revendications

1. Appareil ménager comportant un boîtier, une cavité (3) dans le boîtier et un écran d'affichage (5) pivotant par rapport au boîtier et placé dans la cavité (3) du boîtier dans une position repliée, **caractérisé par** une paire de premiers bras (6, 6') par lesquels l'écran d'affichage (5) est suspendu à sa face arrière de manière à pouvoir tourner au moins autour d'un premier axe de rotation (29) et est déplaçable entre une position, dans laquelle le premier axe de rotation (29) maintient l'écran d'affichage (5) en position repliée, et une position dépliée, dans laquelle le premier axe de rotation (29) s'étend devant la cavité (3) et l'écran d'affichage (5) peut tourner autour du premier axe de rotation (29), les premiers bras (6, 6') pouvant être déployés en passant d'une configuration écartée en position repliée de l'écran d'affichage (5) à une configuration angulaire dans laquelle le au moins un axe de rotation (29) se trouve en position dépliée, les premiers bras (6, 6'), chacun dans le sens de sa longueur, étant montés de façon à pouvoir se déplacer sur un arbre (51, 51') disposé de manière mobile en rotation sur l'appareil ménager à un endroit (2) au voisinage de la cavité (3).

2. Appareil ménager selon la revendication 1, **caractérisé en ce que** dans la configuration écartée, les premiers bras (6, 6') enferment entre eux un angle allant d'environ 150° à environ 180°.

3. Appareil ménager selon la revendication 1 ou 2, **caractérisé en ce que** l'écran d'affichage (5) est relié par l'intermédiaire du premier axe de rotation (29) conjointement aux deux premiers bras (6, 6').

4. Appareil ménager selon la revendication 3, **caractérisé en ce que** le premier axe de rotation (29) est disposé de façon centrée par rapport à la largeur de l'écran d'affichage (5).

5. Appareil ménager selon l'une des revendications précédentes, **caractérisé en ce que** l'écran d'affichage (5) ne dispose pas de liberté de pivotement dans sa position repliée dans la cavité (3).

6. Appareil ménager selon l'une des revendications précédentes, **caractérisé en ce que** les premiers bras (6, 6') sont mobiles autour d'axes de rotation (29, 53, 53') s'étendant parallèlement l'un à l'autre.

7. Appareil ménager selon la revendication 6, **caractérisé en ce que** les axes de rotation (29, 53, 53') s'étendent verticalement.

8. Appareil ménager selon l'une des revendications précédentes, **caractérisé par** des butées (36, 36') placées en regard l'une de l'autre sur les premiers bras (6, 6') et qui prennent appui l'une sur l'autre dans la configuration angulaire des premiers bras (6, 6').

9. Appareil ménager selon la revendication 8, **caractérisé en ce que** les butées (36, 36') sont pourvues de faces biseautées (37, 37') qui s'appliquent l'une contre l'autre dans la configuration angulaire des premiers bras (6, 6').

10. Appareil ménager selon l'une des revendications précédentes, **caractérisé en ce qu'**une rotation des premiers bras (6, 6') et/ou de l'écran d'affichage (5) autour du premier axe de rotation (29) est freinée par au moins un frein à friction (40, 40').

11. Appareil ménager selon la revendication 10, **caractérisé en ce que** le au moins un frein à friction (40, 40') comprend des disques de frein (41, 42) montés sur une broche (43) des premiers bras (6, 6') et qui serrent une bride (23) verticale par rapport au premier axe de rotation (29) de l'écran d'affichage (5).

12. Appareil ménager selon la revendication 11, **caractérisé en ce que** la broche (43) est guidée dans une rainure (46) de la bride (23).

13. Appareil ménager selon l'une des revendications précédentes, **caractérisé en ce qu'**une partie du boîtier de l'appareil ménager est formée par un cadre (2) fixé de manière amovible sur l'appareil ménager, cadre dans lequel se trouve la cavité (3) pour l'écran d'affichage (5) et au dos (4) duquel sont fixés de manière rotative les arbres (51, 51').

14. Appareil ménager selon l'une des revendications précédentes, **caractérisé en ce que** le cadre (2) est fixé sur un abattant ou une porte (1) de l'appareil ménager, servant à fermer ou ouvrir un espace intérieur de l'appareil ménager.

15. Appareil ménager selon l'une des revendications précédentes, **caractérisé en ce qu'**il s'agit d'un appareil frigorifique, en particulier d'un réfrigérateur.
